# EUROPÄISCHE PATENTSCHRIFT

(11) **EP 1 881 025 B1**
(45) Veröffentlichungstag und Bekanntmachung des Hinweises auf die Patenterteilung: **17.02.2010**
(21) Anmeldenummer: 06015123.0
(22) Anmeldetag: 20.07.2006
(51) Int. Cl.: C08K 5/103, C08G 65/332

(54) **Verwendung von Polyethylenglykolestern von Fettsäuren als Gleitmittel für thermoplastische Kunststoffe**
Use of esters of polyethylenglycol and fatty acids as lubricants for thermoplastic materials
Utilisation d esters d acides gras de polyethylenglycol ent tant que lubrifiant pour plastiques thermoplastiques

(43) Veröffentlichungstag der Anmeldung: 23.01.2008
(73) Patentinhaber: Cognis Oleochemicals GmbH, 40589 Düsseldorf (DE)
(72) Erfinder: Brand, Ernst-Udo, 27572 Bremerhaven (DE); Daute, Peter, 27616 Beverstedt (DE)
(74) Vertreter: Herzog, Martin

(56) Entgegenhaltungen:
- WO-A-2004/031121
- WO-A-2005/082991
- DE-A1- 2 619 836

## Beschreibung

### Gebiet der Erfindung

Die Erfindung betrifft die Verwendung von speziellen Polyethylenglykolestern von Fettsäuren als Gleitmittel bei der Verarbeitung von thermoplastischen Kunststoffen.

### Stand der Technik

Bei der Verarbeitung von thermoplastischen Kunststoffen werden Gleitmittel als Verarbeitungshilfsmittel zugesetzt. Einerseits können die Gleitmittel die innere Reibung zwischen Kunststoffteilchen reduzieren, wodurch der Aufschmelz-Vorgang der Kunststoffe erleichtert und die Bildung einer homogenen fließfähigen Masse gefördert wird. Derartig wirkende Gleitmittel werden häufig auch als innere Gleitmittel bezeichnet. Zum anderen können Gleitmittel in der Kunststoffverarbeitung das Kleben der Kunststoffschmelze an heißen Oberflächen der Maschinenteile oder an den Wänden der Formwerkzeuge mindern. Man nimmt an, dass die Gleitmittel, die nach ihrer Einarbeitung in den Kunststoff aufgrund ihrer nur begrenzten Verträglichkeit aus dem Kunststoff an die Oberfläche auswandern, das Kleben herabsetzen. Derartig wirkende Gleitmittel werden auch als äußere Gleitmittel oder als "Formtrennmittel" bezeichnet.

Prinzipiell hat die Verwendung der Gleitmittel auch erheblichen Einfluss auf die Morphologie, Homogenität und Oberflächenbeschaffenheit der Kunststofferzeugnisse.

Ob ein Additiv als inneres oder äußeres Gleitmittel wirkt, hängt von vielen Faktoren ab, insbesondere von dessen Struktur und von der Art des Kunststoffes, wobei innere und äußere Gleitwirkung in vielen Fällen auch nebeneinander bestehen können. Eine erste Orientierung zu Gleitmitteln in PVC und deren Wirkung als inneres und äußeres Gleitmittel sind der Übersicht in Gächter/Müller, Kunststoffadditive Bd. 2/1, C (Hanser Verlag, 1986, S. 570-595) zu entnehmen.

Bekannte Gleitmittel für Kunststoffe sind beispielsweise Fettsäuren, Fettalkohole, Fettsäureester, Fettsäurekomplexester, Wachsester, Dicarbonsäureester, Amidwachse, Metallseifen, Montanwachse, Kohlenwasserstoffwachse oder oxidierte Kohlenwasserstoffe.

Polyethylenglykolmonoester werden als Antistatikum und Antibeschlagmittel in thermoplastischen Kunststoffen eingesetzt (vergl. Antistatic PVC materials. Sheverdyaev, O. N. USSR. Plasticheskie Massy (1985), (4), 21-2; ISSN: 0554-2901; in russischer Sprache; zitiert nach CAPLUS:1985: 423262).

### Beschreibung der Erfindung

Aufgabe der vorliegenden Erfindung war es, Gleitmittel - insbesondere interne Gleitmittel - zur Verfügung zu stellen, die bei der Verarbeitung von thermoplastischen Kunststoffen eingesetzt werden können. Gegenstand der Erfindung ist die Verwendung von Polyethylenglykolestern von Fettsäuren der Formel (I) gemäß Anspruch 1.

Es wurde überraschenderweise gefunden, dass Polyethylenglykolester von Fettsäuren sich in ausgezeichneter Weise als Gleitmittel - und vorzugsweise als interne Gleitmittel - bei der Verarbeitung von thermoplastischen Kunststoffen eignen. Die Verbindungen haben eine gute Verträglichkeit mit den Polymeren und führen bei der Verarbeitung zu einer Verbesserung der Plastifizierung des Polymeren. Ein weiterer Vorteil ist die geringe Eigenflüchtigkeit der Polyethylenglykolester von Fettsäuren.

Die erfindungsgemäß einzusetzenden Gleitmittel sind durch die Formel (I)

R¹-CO-O-(CH₂-CH₂-O)ₙ-OC-R² (I)

charakterisiert, worin die Reste R¹ und R² unabhängig voneinander Alkylgruppen mit 7 bis 17 Kohlenstoffatomen, die gesättigt oder ungesättigt, linear oder verzweigt sein können, bedeuten und n eine Zahl im Bereich von 2 bis 50 bedeutet.

Gegenstand der Erfindung ist dementsprechend die Verwendung von Polyethylenglykolester von Fettsäuren der Formel (I)

R¹-CO-O-(CH₂-CH₂-O)ₙ-OC-R² (I)

worin die Reste R¹ und R² unabhängig voneinander Alkylgruppen mit 7 bis 17 Kohlenstoffatomen, die gesättigt oder ungesättigt, linear oder verzweigt sein können, bedeuten und n eine Zahl im Bereich von 2 bis 50 bedeutet, als Gleitmittel bei der Verarbeitung von thermoplastischen Kunststoffen. In einer bevorzugten Ausführungsform liegt n im Bereich von 2 bis 4.

Der Ausdruck "Gleitmittel" bezeichnet im Rahmen der vorliegenden Erfindung Gleitmittel in seiner breiteren Bedeutung, nämlich externe und/oder interne Gleitmittel. Sofern eine engere Bedeutung gemeint ist, wird das explizit gesagt (es wird dann ausdrücklich die Bezeichnung "interne Gleitmittel" verwendet).

Die erfindungsgemäß einzusetzenden Verbindungen (I) werden vorzugsweise in Mengen im Bereich von 0.05 bis 5.0 Gewichtsteilen - bezogen auf den thermoplastischen Kunststoff - eingesetzt. Besonders bevorzugt ist dabei ein Bereich von 0.1 bis 2.0 Gewichtsteilen.

Als Fettsäuren mit 8 bis 18 C-Atomen kommen sowohl native als auch synthetische geradkettige oder verzweigte und gesättigte oder ungesättigte Verbindungen in Betracht. Die Fettsäuren können auch als Gemische eingesetzt werden. Beispiele für Fettsäuren sind Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure. Auch Hydroxyl- oder Ketogruppen enthaltende Fettsäuren, wie 12-Hydroxystearinsäure kommen hier in Betracht. Erfindungsgemäß als Komponente in den Polyethyleneglykolestern der Formel (I) kommen jedoch nur Fettsäuren mit 8-18 C-Atomen zum Einsatz.

Derartige Fettsäuren können aus natürlich vorkommenden Fetten und Ölen, beispielsweise über die Fettspaltung bei erhöhter Temperatur und erhöhtem Druck und anschließende Trennung der erhaltenen Fettsäuregemische, gegebenenfalls Hydrierung der vorhandenen Doppelbindungen, erhalten werden. Vorzugsweise werden hier technische Fettsäuren eingesetzt, die in der Regel Gemische verschiedener Fettsäuren eines bestimmten Kettenlängenbereichs mit einer Fettsäure als Hauptbestandteil darstellen. Bevorzugt werden Fettsäuren mit 12 bis 18 C-Atomen alleine oder in Mischung.

Im Hinblick auf die thermoplastischen Kunststoffe bestehen an sich keine Beschränkungen. Bevorzugt werden thermoplastische Kunststoffe ausgewählt aus der Gruppe der Polycarbonate, Polyamide, Polyester, Polystyrole und Polyvinylchlorid sowie deren Copolymere, wobei diese thermoplastischen Kunststoffe stabilisiert, pigmentiert, mit Füllstoffen gefüllt oder modifiziert sein können.

In einer bevorzugten Ausführungsform setzt man die Verbindungen (I) als interne Gleitmittel ein. Alles was oben zu verschiedenen Ausführungsformen bezüglich der Verwendung der Verbindungen (I) als Gleitmittel ausgeführt wurde, gilt auch für deren Verwendung als interne Gleitmittel.

Die erfindungsgemäß einzusetzenden Verbindungen (I) - in der Verwendung als Gleitmittel oder als interne Gleitmittel - können als solche oder in Abmischung mit weiteren - von den Verbindungen (I) verschiedenen - üblichen Gleitmitteln oder anderen Kunststoffadditiven verwendet werden.

Weitere übliche Gleitmittel sind Fettsäuren mit 12 bis 24 C-Atomen, Fettalkohole mit 12 bis 24 C-Atomen, Ester aus Fettsäuren mit 12 bis 24 C-Atomen und Fettalkoholen mit 12 bis 24 C-Atomen (sogenannte Wachsester), Ester aus Fettsäuren mit 12 bis 24 C-Atomen und mehrwertigen Alkoholen mit 4 bis 6 Hydroxylgruppen (sogenannte Polyolester), Dicarbonsäureester aus Dicarbonsäuren und Fettalkoholen mit 12 bis 24 C-Atomen und Komplexester aus Dicarbonsäuren, Polyolen und Monocarbonsäuren. Die genannten üblichen Gleitmittel können sowohl einzeln als auch im Gemisch miteinander eingesetzt werden.

Bezüglich der optionalen weiteren - von den Verbindungen (I) verschiedenen - Gleitmitteln gilt:
- Als Fettsäuren mit 12 bis 24 C-Atomen kommen sowohl native als auch synthetische geradkettige gesättigte Verbindungen in Betracht. Werden Fettsäuregemische eingesetzt, so können diese ungesättigter Fettsäuren enthalten. Beispiele für geeignete Fett-säuren sind Laurin-, Tridecan-, Myristin, Pentadecan-, Palmitin-, Margarin-, Stearin-, Behen- und Lignocerinsäure. Auch Hydroxylgruppen enthaltende Fettsäuren, wie 12-Hydroxystearinsäure kommen hier in Betracht. Derartige Fettsäuren können aus natürlich vorkommenden Fetten und Ölen, beispielsweise über die Fettspaltung bei erhöhter Temperatur und erhöhtem Druck und anschließende Trennung der erhaltenen Fettsäuregemische, gegebenenfalls Hydrierung der vorhandenen Doppelbindungen, erhalten werden. Vorzugsweise werden hier technische Fettsäuren eingesetzt, die in der Regel Gemische verschiedener Fettsäuren eines bestimmten Kettenlängenbereichs mit einer Fettsäure als Hauptbestandteil darstellen. Bevorzugt werden Fettsäuren mit 12 bis 18 C-Atomen alleine oder in Mischung.
- Bei den Fettalkoholen mit 12 bis 24 C-Atomen handelt es sich meist um geradkettige gesättigte Vertreter, die aus natürlich vorkommenden Fetten und Ölen durch Umesterung mit Methanol, anschließender katalytischer Hydrierung der erhaltenen Methylester und fraktionierte Destillation erhalten werden können. Beispiele für solche Fettalkohole sind Lauryl-, Myristyl-, Cetyl-, Stearyl- und Behenylalkohol. Diese Verbindungen können einzeln und im Gemisch miteinander enthalten sein. Bevorzugt werden technische Fettalkohole eingesetzt, die normalerweise Gemische aus verschiedenen Fettalkoholen eines begrenzten Kettenlängenbereichs darstellen, in denen jeweils ein Fettalkohol als Hauptbestandteil vorhanden ist. Bevorzugt sind technische Fettalkoholmischungen mit 12 bis 18 C-Atomen.
- Geeignet sind weiterhin sogenannte Wachsester, also Ester aus Fettsäuren mit 12 bis 24 C-Atomen und Fettalkoholen mit 12 bis 24 C-Atomen, die vorzugsweise der Formel (II) folgen,

   R³CO-OR⁴ (II)

   in der R³CO für einen gesättigten und/oder ungesättigten-Acylrest mit 12 bis 24, vorzugsweise 12 bis 18 Kohlenstoffatomen und R⁴ für einen Alkyl- und/oder AIkenylrest mit 12 bis 24, vorzugsweise 12 bis 18 Kohlenstoffatomen steht. -Typische Beispiele sind Ester von Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Gadoleinsäure, Behensäure und Erucasäure sowie deren technische Mischungen mit Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen. Bevorzugte Wachsester sind Stearylpalmitat, Stearylstearat, Stearylisostearat, Stearyloleat, Stearylbehenat, Stearylerucat, Isoste-raylpalmitat, Isostearylstearat, I-sostearylisostearat, Isostearyloleat, Isostearylbehenat, Isostea-rylerucat, Oleylpalmitat, Oleylstearat, Oleylisostearat, Oleyloleat, Oleylbehenat, Oleylerucat, Behenylpalmitat, Behenylstearat, Behenylisostearat, Behenyloleat, Behenylbehenat, Behenyloleat sowie deren Mischungen. Insbesondere bevorzugt als Wachsester ist Stearylstearat. Dabei ist zu beachten, dass Stearylstearat normalerweise aus technischen Ausgangsmaterialien hergestellt wird, die ihrerseits Stoffgemische sind, so dass der Ester ebenfalls ein Stoffgemisch darstellt.
   Die genannten Ester können nach bekannten Methoden der organischen Synthese, beispielsweise durch Erhitzen stöchiometrischer Mengen Fettsäure und Fettalkohol auf 180 bis 250 °C, gegebenenfalls in Gegenwart eines geeigneten Veresterungskatalysators wie Zinnschliff und unter Schutzgas, und Abdestillieren des Reaktionswassers erhalten werden.
- Weiterhin geeignet als weitere Gleitmittel sind Polyolfettsäureester, d.h. Ester von Fettsäuren mit 12 bis 24 C-Atomen und Polyolen mit 4 bis 6 Hydroxylgruppen. Als Alkoholkomponente kommen vor allem aliphatische Polyole mit 4 bis 12 C-Atomen in Betracht, beispielsweise Erythrit, Pentaerythrit, Dipentaerythrit, Ditrimethylolpropan, Diglycerin, Triglycerin, Tetraglycerin, Mannit und Sorbit in Betracht. Bei diesen Polyolestern kann es sich um Vollester handeln, in denen sämtliche Hydroxylgruppen des Polyols mit Fettsäure verestert sind. Es kommen aber auch Polyolpartialester in Betracht, die im Molekül eine oder mehrere freie Hydroxylgruppen aufweisen. Diese Polyolfettsäureester können ebenfalls nach bekannten Verfahren der organischen Synthese durch Veresterung der Polyole mit stöchiometrischen oder unterstöchiometrischen Mengen freier Fettsäuren erhalten werden. Beispiele für solche Polyolfettsäureester sind die Stearinsäure- und Stearinsäure/Palmitinsäurevollester des Erythrits, Pentaerythrits und Di-pentaerythrits und Diglycerins, die Dilaurate des Dipentaerythrits, Ditrimethylolpropans, Triglycerins, Mannits und Sorbits, die Distearate des Erythrits, Pentaerythrits, Dipentaerythrits und Tetraglycerins sowie die so genannten Sesquiester des Pentaerythrits, Dipentaerythrits, Mannits und Sorbits, zu deren Herstellung man auf 1 Mol Polyol 1,5 Mol Fettsäure, insbesondere Palmitin- und/oder Stearinsäure, einsetzt. Die genannten Polyolfettsäureester stellen in der Regel, schon auf Grund der jeweils eingesetzten Ausgangsmaterialien, Stoffgemische dar.
- Weiterhin geeignete zusätzliche Gleitmittel sind Komplexester, die ebenfalls aus dem Stand der Technik an und für sich bekannt sind. Die Komplexester sind prinzipiell aufgebaut aus Dicarbonsäuren, Polyole und Monocarbonsäuren. Zur Herstellung der Komplexester können folgende Dicarbonsäuren eingesetzt werden: Oxal-, Malon-, Bernstein-, Glutar-, Adipin-, Pimelin-, Kork-, Azelain-, Sebazin-, Nonandicarbon-, Undecandicarbon-, Eikosandicarbon-, Malein-, Fumar-, Citracon-, Mesacon-, Itakon-, Cyclopropandicarbon-, Cyclobutandicarbon-, Cylopentandicarbon-, Campher-, Hexahydrophthal-, Phthal-, Terephthal-, Isophthal-, Naphthal- und Diphenyl-o,o'-dicarbonsäure. Als aliphatische Polyole mit 2 bis 6 Hydroxylgruppen werden in der Regel folgende Verbindungen verwendet: Ethylenglykol, 1,2-Propylenglykol, 1,3-Propylenglykol, 1,4-Butandiol, 2,3-Butandiol, 1,5-Pentandiol, 1,6-Hexandiol, Glycerin, Trimethylolpropan, Erythrit, Pentaerythrit, Dipentaerythrit, Xylit, Mannit und Sorbit. Als Monocarbonsäure eignen sich geradkettige oder verzweigte, synthetische oder native Säuren, beispielsweise Laurin-, Myristin-, Palmitin-, Margarin-, Stearin-, Arachidin-, Behen-, Lignocerin-, Cerotinsäure, Montansäure, Öl-, Elaidin-, Eruka-, Linol-, Linolen- und Isostearinsäure, ferner Gemische dieser Säuren, insbesondere solche, wie sie aus natürlichen Fetten und Ölen gewonnen werden können. Bevorzugte Komplexester sind aus aliphatischen Dicarbonsäuren mit 4 bis 8 C-Atomen, Polyolen mit 3 oder 4 Hydroxylgruppen und aliphatischen Monocarbonsäuren mit 14 bis 22 C-Atomen aufgebaut. Hervorragende Ergebnisse werden mit Komplexestern aus Adipinsäure, Pentaerythrit und Monocarbonsäuren mit 14 bis 22 C-Atomen erzielt.
- Weiterhin geeignete zusätzliche Gleitmittel im Sinne der Erfindung sind Dicarbonsäureester von Fettalkoholen mit 12 bis 24 C-Atomen. Geeignete Dicarbonsäuren sind bereits im Zusammenhang mit den Komplexestern exemplarisch aufgeführt worden. Als Fettsäuren eignen sich die bereits oben besprochenen Fettsäuren. Besonders bevorzugt sind Phthalatsäureester und insbesondere Distearylphthalat.
- Weitere zusätzliche Gleitmittel, die alleine oder in Kombination eingesetzt werden können, sind Kohlenwasserstoffwachse, die im Temperaturbereich von 70 bis 130°C schmelzen, oxidierte Polyethylenwachse, α-Olefine, Ethylendiamindistearat, Montansäureester von Diolen, beispielsweise von Ethandiol, 1,3-Butandiol und Glycerin, Mischungen derartiger Montansäureester mit unveresterten Montansäuren und Metallseifen, insbesondere Salze von organischen Monocarbonsäuren mit Metallen der zweiten Haupt- und/oder Nebengruppe des Periodensystems, wie Calciumseifen und Zinkseifen.

Ein weiterer Erfindungsgegenstand ist gemäß den obigen Ausführungen die Verwendung von Gleitmittelkombinationen für thermoplastische Kunststoffe enthaltend
(a) ein oder mehrere Fettsäure-Polyethylenglykolester (I) und
(b) ein oder mehrere zusätzliche Gleitmittel (die nicht unter die Formel (I) fallen), mit der Maßgabe, dass man die Komponenten (a) und (b) im Gewichtsverhältnis von 10 : 90 bis 90 : 10, vorzugsweise 20: 80 bis 80 : 20 einsetzt.
Die Bezeichnung Gleitmittelkombinationen bezieht sich dabei sowohl auf Gleitmittel als auch auf interne Gleitmittel.

Die praktische Anwendung der erfindungsgemäßen Gleitmittelmischungen erfolgt in der Weise, dass sie den zu verarbeitenden thermoplastischen Kunststoffen in Mengen von 0,05 bis 5 und insbesondere 0,1 bis 2 Gewichtsteile zu 100 Gewichtsteilen thermoplastischen Kunststoffes beigegeben werden. Zweckmäßigerweise werden die Gleitmittelmischungen der bei der Herstellung des thermoplastischen Kunststoffes anfallenden Schmelze zugesetzt oder auf das Kunststoffgranulat bzw. -pulver bei erhöhten Temperaturen aufgebracht.

Die thermoplastischen Kunststoffe können gewünschtenfalls zusätzliche Additive enthalten. Beispiele für geeignete Additive sind Antistatika, Antibeschlagmittel, Antioxidantien, UV-Stabilisatoren, Haftmittel, Kalandrierhilfen, Trennmittel, Schmiermittel, Weichmacher, Duftmittel, Flammschutzmittel, Füllstoffe und Mittel zur Erhöhung der Thermostabilität (Thermostabilisatoren).

Die thermoplastischen Kunststoffe können auf übliche Weise weiterverarbeitet werden, beispielsweise mittels Extrusion, Pressen, Walzen, Kalandieren, Sintern, Spinnen, Hohlkörperblasen, Schäumen, Spritzgießen oder eine Verarbeitung nach dem Plastisol-Verfahren.

### Beispiele

### 1. Herstellung der erfindungsgemäßen Gleitmittel:

### Beispiel 1:

237 g Diethylenglykol (Fa. Fluka), 1151 g technische Stearinsäure (Fa. Cognis) und 0,7 g Zinn-(II)-oxalat (Fa. Goldschmidt) wurden unter Stickstoff aufgeheizt. Die Veresterungsreaktion setzte bei ca. 170 °C mit der Bildung von Wasser ein. Nach 3 Stunden wurde durch Anlegen von Vakuum das Reaktionswasser weiter abgezogen und das Vakuum innerhalb von 4 Stunden bis auf ca. 15 mbar gesenkt. Die Endtemperatur betrug 200 °C.
Bei einer Säurezahl (SZ) <6 war die Reaktion beendet. Es wurde auf 90 °C gekühlt und filtriert. Ausbeute 1296 g, SZ = 1,6, (Verseifungszahl) VZ = 184

### Beispiel 2:

Analog zu Beispiel 1 wurde aus 167 g PEG 600 (Fa. Fluka) und 147 g technische Stearinsäure (Fa. Cognis) PEG-600-distearat hergestellt.
Ausbeute 298 g, SZ = 5,9, VZ = 102

### 2. Herstellung von Dryblends

Aus PVC-Pulver und verschiedenen Additiven wurde in einem Mischer der Firma Henschel ein Dryblend hergestellt (Materialmenge = 3 kg, Heiztemperatur = 120°C, anschließendes Abkühlen); die Zusammensetzungen sind der nachfolgenden Tabelle zu entnehmen (die Angaben in der Tabelle bedeuten Gewichtsteile).

| Beispiel: | V1 | V2 | V3 | B3 | B4 |
|---|---|---|---|---|---|
| PVC Evipol SH 6520 (Fa. Ineos) | 100 | 100 | 100 | 100 | 100 |
| Pb-Sulfat, 3-basisch | 2 | 2 | 2 | 2 | 2 |
| Bleistearat (28%Pb) | 0,5 | 0,5 | 0,5 | 0.5 | 0.5 |
| Calciumstearat | 0.5 | 0.5 | 0,5 | 0.5 | 0.5 |
| Gehärtetes Ricinusöl | - | 1.0 | - | - | - |
| Distearylphthalat | - | - | 1.0 | - | - |
| Gleitmittel nach Beispiel 1 | - | - | | 1.0 | - |
| Gleitmittel nach Beispiel 2 | - | - | | - | 1.0 |

In dieser Tabelle stellen V1 bis V3 Vergleichsbeispiele dar. Bei V1 wurde auf den Zusatz eines Gleitmittels verzichtet. Bei V2 wurde gehärtetes Ricinusöl eingesetzt, das als wichtigstes internes Gleitmittel für PVC-Flaschen gilt. (vergl. Plastics Additives Handbook 5th Edition, Hanser Verlag, S. 537). Bei V3 wurde Distearylphthalat, ein internes Gleitmittel für die Profilextrusion eingesetzt. B4 und B5 stellen erfindungsgemäße Rezepturen dar.

### 3. Herstellung von Flachbändern

Die o.g. Dryblends wurden auf einem Doppelschneckenextruder der Firma. Weber zu einem Flachband extrudiert (Parameter der Extrusion: Drehzahl = 15 UpM; Temperatur = 190°C). Als Maß für die Plastifizierung wurde die Leistungsaufnahme des Extruders, die Maschinenbelastung (in %), ausgewertet, wobei eine frühe Plastifizierung zu einer Erhöhung der Maschinenbelastung führt. Als Maß für die Gleitmittelwirksamkeit dient der Massedruck (bar) vor dem Werkzeug. Hier bedeutet ein niedriger Massedruck eine gut Gleitmittelwirkung.

| Beispiel | Maschinenbelastung (%) | Massedruck (bar) |
|---|---|---|
| V1 | 48.7 | 347 |
| V2 | 56.6 | 354 |
| V3 | 46.0 | 324 |
| B4 | 51.1 | 344 |
| B5 | 57.8 | 336 |

Die erfindungsgemäßen Beispiele (B4 und B5) führten zu einer früheren Plastifizierung (Erhöhung der Maschinenbelastung) bei geringerem Massedruck als der Vergleichsansatz V1. Die Vergleichsbeispiele V2 und V3 führen entweder zu einer besseren Plastifizierung bei einer Erhöhung des Massedrucks oder verschlechtern die Plastifizierung.

## Patentansprüche

1. Verwendung von Polyethylenglykolestern von Fettsäuren der Formel (I)
R¹-CO-O-(CH₂-CH₂-O)ₙ-OC-R² (I)
worin die Reste R¹ und R² unabhängig voneinander Alkylgruppen mit 7 bis 17 Kohlenstoffatomen, die gesättigt oder ungesättigt, linear oder verzweigt sein können, bedeuten,
wobei als Fettsäuren solche mit 8 bis 18 C-Atomen ausgewählt sind,
und n eine Zahl im Bereich von 2 bis 50 bedeutet, als Gleitmittel bei der Verarbeitung von thermoplastischen Kunststoffen.

2. Verwendung nach Anspruch 1, worin n eine Zahl im Bereich von 2 bis 4 ist.

3. Verwendung nach einem der Ansprüche 1 oder 2, wobei die Gleitmittel als interne Gleitmittel eingesetzt werden.

4. Verwendung nach Anspruch 1, wobei eine Gleitmittelkombination für thermoplastische Kunststoffe enthaltend (a) ein oder mehrere Fettsäure-Polyethylenglykolester (I) und (b) ein oder mehrere zusätzliche Gleitmittel (die nicht unter die Formel (I) fallen) eingesetzt wird, mit der Maßgabe, dass man die Komponenten (a) und (b) im Gewichtsverhältnis von 10 : 90 bis 90 10, vorzugsweise 20: 80 bis 80 : 20 einsetzt.

5. Verwendung nach Anspruch 4, wobei die Gleitmittelkombinationen als interne Gleitmittel eingesetzt werden.

## Claims

1. Use of polyethylene glycol esters of fatty acids of the formula (I)
R¹-CO-O-(CH₂-CH₂-O)ₙ-OC-R² (I)
wherein the residues R¹ and R² independently of each other represent alkyl groups with 7 to 17 carbon atoms, which can be saturated or unsaturated, linear or branched,
whereby fatty acids with 8 to 18 C atoms are selected as fatty acids,
and n represents a number in the range from 2 to 50,
as lubricant in the processing of thermoplastic plastics.

2. Use according to claim 1, wherein n is a number in the range from 2 to 4.

3. Use according to one of claims 1 or 2, wherein the lubricants are used as internal lubricant.

4. Use according to claim 1, whereby a lubricant combination for thermoplastic plastics is used comprising (a) one or more fatty acid polyethylene glycol esters (I) and (b) one or more additional lubricants (which do not fall under formula (I)), provided that the components (a) and (b) are used in a weight ratio of 10 : 90 to 90 : 10, preferably 20 : 80 to 80 : 20.

5. Use according to claim 4, wherein the lubricant combinations are used as internal lubricant.

## Revendications

1. Utilisation d'esters de polyéthylèneglycol d'acides gras, ayant la formule (I)
R¹-CO-O-(CH₂-CH₂-O)ₙ-OC-R² (I),
dans laquelle les restes R¹ et R² signifient indépendamment l'un de l'autre des groupes d'alkyle avec 7 à 17 atomes de carbone qui peuvent être saturés ou insaturés, linéaires ou ramifiés, dans quel cas on utilise en tant qu'acides gras ceux ayant 8 à 18 atomes de carbone, et dans laquelle n signifie un nombre dans la région de 2 à 50, en tant que lubrifiant dans l'usinage de matières plastiques thermoplastiques.

2. Utilisation selon la revendication 1, où n est un nombre dans la région de 2 à 4.

3. Utilisation selon l'une des revendications 1 ou 2, dans quel cas les lubrifiants sont utilisés en tant que lubrifiants internes.

4. Utilisation selon la revendication 1, dans quel cas une combinaison de lubrifiants pour des matières plastiques thermoplastiques, contenant (a) un ou une pluralité d'esters de polyéthylèneglycol d'acides gras, et (b) un ou une pluralité de lubrifiants supplémentaires (qui ne sont pas inclus dans la formule (I)) sont utilisés, dans la mesure où les composants (a) et (b) sont utilisés dans un rapport pondéral de 10 : 90 jusqu'à 90 : 10, de préférence 20 : 80 jusqu'à 80 : 20.

5. Utilisation selon la revendication 4, dans quel cas les combinaisons de lubrifiants sont utilisées comme lubrifiants internes.
